# NEUE EUROPÄISCHE PATENTSCHRIFT

(11) **EP 2 844 466 B2**
(45) Veröffentlichungstag und Bekanntmachung des Hinweises auf die Entscheidung über den Einspruch: **20.10.2021**
(45) Hinweis auf die Patenterteilung: 14.09.2016
(21) Anmeldenummer: 13722721.1
(22) Anmeldetag: 03.05.2013
(51) Int. Cl.: B23K 1/00, B23K 35/28

(54) **FLUSSMITTELFREIES LÖTEN VON ALUMIUMVERBUNDWERKSTOFFEN**
FLUX FREE BRAZING OF ALUMINIUM
BRASSAGE SANS FLUX D'ALUMINIUM

(30) Priorität: 04.05.2012 EP 12166843
(43) Veröffentlichungstag der Anmeldung: 11.03.2015
(73) Patentinhaber: Speira GmbH, 41515 Grevenbroich (DE)
(72) Erfinder: ECKHARD, Kathrin, 50969 Köln (DE); SCHWARZ, Jochen, 41849 Wassenberg (DE); GÜSSGEN, Olaf, 50931 Köln (DE); SICKING, Raimund, 47506 Neukirchen-Vluyn (DE); JANSSEN, Hartmut, 40724 Hilden (DE)
(74) Vertreter: Cohausz & Florack
(86) Internationale Anmeldenummer: PCT/EP2013/059290
(87) Internationale Veröffentlichungsnummer: WO 2013/164466

(56) Entgegenhaltungen:
- EP-A1- 1 067 213
- WO-A1-2010/000666
- JP-A- 4 100 674
- JP-A- 4 100 696
- JP-A- 5 154 693
- US-A- 5 102 033
- US-A1- 2007 204 935
- US-A1- 2009 209 444
- Priciples of Brazing, Seiten 113-135
- ASM Specialty Handbook Aluminium and Aluminium Alloys, Seiten 420-422, 424 und 460-462
- Aluminium Brazing Handbook, Seiten 133-135
- Aluminium. Properties and Physical Metallurgy, Seiten 372-373
- Talat Lecture 5301 und 5201, published 1994

## Beschreibung

Die Erfindung betrifft die Verwendung eines Aluminiumverbundwerkstoffs bestehend aus mindestens einer Aluminiumkernlegierung und mindestens einer ein- oder beidseitig auf der Aluminiumkernlegierung vorgesehenen, äußeren Lotschicht bestehend aus einer Aluminiumlotlegierung, und die Aluminiumlotschicht eine gebeizte Oberfläche aufweist.

Aluminiumverbundwerkstoffe, bestehend aus mindestens einer Aluminiumkernlegierung und mindestens einer ein- oder beidseitig auf der Aluminiumkernlegierung angeordneten Aluminiumlotschicht, werden zur Herstellung von gelöteten Konstruktionen verwendet. Häufig weisen diese eine Vielzahl von Lötstellen auf, wie dies beispielsweise bei Wärmetauschern der Fall ist. Dabei werden zum Löten von Metallbauteilen verschiedene Lötverfahren eingesetzt. Eines der häufigsten Verfahren ist das sogenannte "Controlled Atmosphere Brazing"-(CAB)-Lötverfahren, bei welchem die Aluminiumbauteile in der Regel unter Verwendung von Flussmitteln gelötet werden und während des Lötvorganges einer genau kontrollierten Atmosphäre, beispielweise einer Stickstoffatmosphäre ausgesetzt sind. Andere thermische Fügeverfahren verwenden ebenfalls Flussmittel und erweichen das Aluminiumlot ebenfalls bei Anwesenheit eines Schutzgases. Der Einsatz von korrosiven oder nicht korrosiven Flussmitteln birgt allerdings Nachteile, beispielsweise erhöhte Anlagenkosten und technische Probleme bei der Wechselwirkung von Resten des Flussmittels mit beispielsweise Kühlmittelzusätzen in einem Wärmetauscher. Darüber hinaus ist die Verwendung der Chemikalien auch in Bezug auf die Vermeidung von Umweltbelastungen problematisch. Das zweite Verfahren, welches häufig angewendet wird, ist das Vakuumlöten, bei welchem die zu lötenden Bauteile in einer Atmosphäre mit sehr niedrigem Druck, beispielsweise etwa einmal 10⁻⁵ mbar oder weniger gelötet werden. Das Vakuumlöten kann ohne Flussmittel erfolgen, wobei allerdings dem Aluminiumlot oft ein bestimmter Anteil von Magnesium zugefügt wird, um ein besseres Lötergebnis zu erhalten. Aus der internationalen Patentanmeldung WO 2010/000666 A1 ist darüber hinaus ein Verfahren zum flussmittelfreien Löten mit dem CAB-Lötverfahren bekannt, bei welchem die Aluminiumlotschicht aus einer ersten Aluminiumlotschicht und einer zweiten Aluminiumlotschicht besteht. Die zweite Aluminiumlotschicht besteht aus einer Al-Si Aluminiumlegierung, welche neben 5 Gew.-% - 20 Gew.-% Silizium auch 0,01 Gew.-% - 3 Gew.-% Magnesium enthält. Die erste Aluminiumlotschicht enthält dagegen 2 - 14 Gew.-% Silizium und weniger als 0,4 Gew.-% Magnesium. Der zweischichtige Aufbau der Aluminiumlotschicht ist allerdings insofern nachteilig als dass bei der Herstellung der zweischichtigen Aluminiumlotschicht höhere Kosten anfallen.

Aus den japanischen Veröffentlichungen JP 04-1000696, JP 04-100674 sowie der JP 05-154693 ist die Verwendung eines alkalisch gebeizten Aluminiumverbundwerkstoffes in einem Vakuumlötverfahren oder mit Flussmitteln in einem CAB-Lötverfahren bekannt.

Von diesem Stand der Technik ausgehend liegt der vorliegenden Erfindung die Aufgabe zugrunde, ein einfaches thermisches Fügeverfahren durch Verwendung eines Aluminiumverbundwerkstoffes vorzuschlagen.

Die US 2007/0204935 A1 betrifft ein Verfahren zum flussmittelfreien Löten von Aluminiumlegierungsprodukten, wobei die Oberfläche der Produkte über eine alkalische Tauchbehandlung und das Erzeugen einer Konversionsschicht vorbehandelt wird.

Die zuvor aufgeführte Aufgabe wird gemäß einer ersten Lehre der vorliegenden Erfindung durch eine Verwendung eines Aluminiumverbundwerkstoffes mit den Merkmalen des Patentanspruches 1 gelöst.

Es hat sich gezeigt, dass nach einem alkalischen Beizen der Oberfläche der Aluminiumlotschicht die Eigenschaften des Aluminiumverbundwerkstoffs in einem thermischen Fügeverfahren, insbesondere Lötverfahren, bei Anwesenheit von einem Schutzgas sich drastisch ändern können. Unter thermischen Fügeverfahren werden Verfahren verstanden, welche das Aluminiumlot erhitzen, so dass eine stoffschlüssige Fügeverbindung mit dem Verbindungspartner entsteht. Üblicherweise erfolgt das thermische Fügen unter Anwesenheit eines Schutzgases, beispielsweise eines Inertgases. Dabei wird unter "Anwesenheit eines Schutzgases" verstanden, dass zumindest im Bereich der thermischen Fügenaht zumindest teilweise Sauerstoff durch das Schutzgas verdrängt wird, so dass beim Aufschmelzen des Aluminiumlotes die Bildung von Aluminiumoxid verhindert bzw. stark verringert wird. Bislang waren gute Fügeergebnisse unter Schutzgas bei einfachem Lotschichtaufbau nur durch Verwendung von Flussmitteln erreichbar. Bei der erfindungsgemäßen Verwendung werden diese aber auch ohne Flussmittel erzielt.

Im Ergebnis bleiben auf dem Bauteil keine Reste an Flussmittel zurück, was einerseits zusätzliche Reinigungsschritte einspart und andererseits Vorteile in Bezug auf die Korrosionsbeständigkeit der gefügten Bauteile bietet. Bei nicht korrosiven Flussmitteln ergeben sich die Vorteile der Erfindung insbesondere dadurch, dass nachträglich beispielsweise Medien führende Bereiche des gelöteten Verbundwerkstoffes keine Wechselwirkung mit Flussmittelresten aufweisen.

Der Aluminiumverbundwerkstoff kann auch ohne die Verwendung von Flussmitteln im CAB-Lötverfahren verwendet werden, wie umfangreiche Löttests gezeigt haben. Das Beizen führt auf der Aluminiumoberfläche einerseits zu einer Entfernung der Aluminiumoxidschicht, welche sich bei der Herstellung des Aluminiumverbundwerkstoffes gebildet hat. Es bildet sich danach eine neue natürliche Oxidschicht aus, welche deutlich dünner ist, als die beim Fertigungsprozess des Aluminiumverbundwerkstoffs gebildete Oxidschicht. Zudem wird durch das Beizen eine Anreicherung an Silizium in der Oberfläche erreicht und die Oberfläche mit einer Anzahl von geätzten Vertiefungen versehen. Alle drei Effekte werden als Ursache für das sehr gute Lötverhalten des erfindungsgemäßen Aluminiumverbundwerkstoffes angesehen.

Wie Rasterelektronenmikroskopaufnahmen zeigen, können bei intensiver Beize auch Siliziumpartikel auf der Aluminiumlotschicht freigelegt werden, so dass es zu einer starken Anreicherung an Silizium unmittelbar an der Oberfläche kommt. Bei der erfindungsgemäßen Verwendung des Aluminiumverbundwerkstoffs wird der aus dem Stand der Technik bekannte, komplexe Aluminiumlotschichtaufbau, um ein flussmittelfreies Löten zu ermöglichen, nicht benötigt. Eine Lötverbindung kann damit kostengünstiger bereitgestellt werden.

Gemäß der erfindungsgemäßen Verwendung des Aluminiumverbundwerkstoffs ist die Oberfläche der Aluminiumlotschicht vor oder während des Beizens entfettet worden. Die Entfettung kann beispielsweise durch eine Glühung erfolgen. Allerdings ist auch die Verwendung eines Entfettungsmediums denkbar. Die entfettete Oberfläche der Aluminiumlotschicht des Aluminiumverbundwerkstoffs ermöglicht einen verbesserten Beizangriff und damit ein verbessertes Lötverhalten ohne Flussmittels.

Wie bereits zuvor ausgeführt, weist die gebeizte Oberfläche der Aluminiumlotschicht zumindest teilweise freiliegende oder freiliegende Siliziumpartikel auf. Hier entstehen lokal höhere Siliziumkonzentrationen, welche in Abhängigkeit der Lotzusammensetzung zu einem lokal engeren Schmelzbereich führen können. Die Siliziumpartikel schmelzen mit der umgebenden Aluminiummatrix und begünstigen insofern das Flüssigwerden des restlichen Aluminiumlots. Die Benetzungseigenschaften des Aluminiumlots sind sehr komplex und im Detail noch nicht verstanden. Durch umfangreiche Versuche konnte jedoch festgestellt werden, dass zumindest teilweise freiliegende Siliziumpartikel die Benetzungseigenschaften des Aluminiumlots verbessern können.

Gemäß einer weiteren Ausgestaltung der Verwendung des Aluminiumverbundwerkstoffs ist als Aluminiumkernlegierung eine Aluminiumlegierung vom Typ AA 1xxx, AA 2xxx, AA3xxx, AA 5xxx oder AA 6xxx vorgesehen. Die Aluminiumlegierung der genannten Typen weisen in der Regel die mechanischen Eigenschaften auf, welche für den Einsatz beispielsweise als Wärmetauscher oder in anderen Anwendungsgebieten für gelötete Konstruktionen erforderlich sind. Für Wärmetauscher werden besonders bevorzugt Aluminiumlegierungen vom Typ AA 3xxx verwendet, da diese entsprechend niedrig legiert, kostengünstig und korrosionsbeständig sind.

Gemäß einer weiteren Ausgestaltung der Verwendung des Aluminiumverbundwerkstoffs weist die Aluminiumlotlegierung die folgende Zusammensetzung in Gew.-% auf:
6,5 % ≤ Si ≤ 15 %,
Fe ≤ 1 %,
Cu ≤ 0,3 %,
Mg ≤ 2,0 %,
Mn ≤ 0,15 %,
Zn ≤ 0,15 %,
Ti ≤ 0,30 %,

Rest A1 und unvermeidbare Verunreinigungen einzeln maximal 0,05 %, in Summe maximal 0,15 %.

Als Aluminiumlotlegierungen werden beispielsweise die Aluminiumlegierungen vom Typ AA 4343 oder AA 4045 oder AA 4047 bevorzugt verwendet. Allen Aluminiumlotlegierungen, welche die oben genannte Spezifikation erfüllen, ist gemein, dass diese einen niedrigeren Schmelzpunkt als die Aluminiumkernlegierung aufweisen, so dass beim Erhitzen des zu lötenden Bauteils auf eine Temperatur unterhalb der Solidustemperatur der Kernlegierung die Aluminiumlotschicht flüssig bzw. teilweise flüssig wird. Die Aluminiumkernlegierung schmilzt nicht auf. Die Si-Gehalte der Aluminiumlotlegierung liegen bevorzugt zwischen 6,5 Gew.-% und 12 Gew.-%.

Gemäß einer weiteren Ausgestaltung der Verwendung des erfindungsgemäßen Aluminiumverbundwerkstoffs ist der Verbundwerkstoff vor dem Beizen weich, rückgeglüht oder walzhart, damit die mechanischen Eigenschaften, welche in der Anwendung später erfordert werden, gewährleistet sind.

Ein wirtschaftlich in großem Maßstabe herstellbarer Aluminiumverbundwerkstoff kann dadurch bereitgestellt werden, dass der Aluminiumverbundwerkstoff durch simultanes Gießen oder Walzplattieren hergestellt worden ist.

Der erfindungsgemäß verwendete bandförmige Aluminiumverbundwerkstoff wird bereitgestellt durch ein Verfahren zur Herstellung eines bandförmigen Aluminiumverbundwerkstoffs bestehend aus mindestens einer Aluminiumkernlegierung und mindestens einer ein- oder beidseitig auf der Aluminiumkernlegierung vorgesehenen, äußeren Aluminiumlotschicht, bei welchem durch Walzplattieren oder simultanes Gießen und anschließendes Walzen ein bandförmiger Aluminiumverbundwerkstoff hergestellt wird, und die Lotschicht des Aluminiumverbundwerkstoffes einer alkalischen Beize unterzogen wird. Wie bereits zuvor ausgeführt, haben die Erfinder überraschenderweise festgestellt, dass durch die alkalische Beize die Löteigenschaften insbesondere beim flussmittelfreien Löten deutlich verbessert werden können, so dass beim CAB-Löten auf den Einsatz eines Flussmittels verzichtet werden kann. Wird der Aluminiumverbundwerkstoff vor dem Beizen oder während des Beizens mit einem Entfettungsmedium entfettet, führt dies zu einem verbesserten Beizabtrag und damit zu einem verbesserten Lötergebnis. Die Entfettung vor dem Beizen kann auch beispielsweise durch eine Glühung erfolgen. Verbesserte Lötergebnisse konnten mit einer Entfettung mit einem Entfettungsmedium während des Beizens ermittelt werden.

Dabei weist die alkalische Beize Natronlauge mit einer Konzentration von 0,2 bis 10 Gew.-% oder 0,2 - 5 Gew..-% auf. Es hat sich gezeigt, dass mit den genannten Konzentrationen ein ausreichendes Beizen der Oberfläche der Aluminiumlotschicht durchgeführt werden kann, so dass auf einfache Weise ein Aluminiumverbundwerkstoff zum flussmittelfreien Löten bereitgestellt werden kann. Weiter enthält die Beize neben Natronlauge zusätzlich organische oder anorganische Komplexbildner, wie beispielsweise Natriumgluconat oder Natriumtripolyphosphat, was das Lötergebnis überraschenderweise weiter verbessert.

Das Beizen der Aluminiumlotschicht erfolgt inline mit dem letzten Kaltwalzschritt, so dass ein möglichst wirtschaftlicher Herstellprozess bereitgestellt werden kann. Der Aluminiumverbundwerkstoff kann aber auch vor dem Beizen in einem Durchlaufofen rück- oder weich geglüht werden. Damit kann ein für die Herstellung von Wärmetauschern optimiertes Coil eines bandförmigen Aluminiumverbundwerkstoffs auf hoch wirtschaftliche Weise bereitgestellt werden. Alternativ wird das Beizen durch die Verwendung eines Coil-to-Coil-Fertigungsschrittes unabhängig von anderen Herstellschritten durchgeführt.

Ferner kann der fertig gewalzte Aluminiumverbundwerkstoff auch in einem Kammerofen in Coilform geglüht und anschließend der Oberflächenbeize zugeführt werden. Auch diese Verfahren sind ökonomisch günstig, da beispielsweise hohe Investitionskosten für Durchlauföfen nicht entstehen.

Gemäß einer weiteren Ausgestaltung des Verfahrens zur Herstellung des verwendeten Aluminiumverbundwerkstoffs enthält das Entfettungsmedium mindestens 0,2 bis 15 Gew.-%, vorzugsweise 0,5 - 3 Gew.-% oder 2 bis 8 Gew.-% eines Gemisches aus 5 - 40 Gew.-% Natriumtripolyphosphat, 3 - 10 Gew.-% Natriumgluconat, 3 - 8 Ges.-% nicht ionischer und anionischer Tenside, optional 0,5 - 70 Gew.-% Natriumkarbonat, bevorzugt 30 - 70 Gew.-% Natriumkarbonat. Die genannte Zusammensetzung des Entfettungsmediums hat insbesondere in Verbindung mit einer alkalischen Beize, welche Natronlauge bevorzugt enthält, zu sehr guten Lötergebnissen geführt. Das genannte Entfettungsmedium kann vor der Anwendung der Beize oder gemeinsam mit der Beize angewendet werden und hinterlässt eine im CAB-Verfahren ohne Flussmittel sehr gut lötbare Oberfläche der Aluminiumlotschicht.

Um den Aluminiumverbundwerkstoff für die spätere Anwendung vorzubereiten ist es vorteilhaft, dass der Aluminiumverbundwerkstoff vor dem Beizen weich-oder rückgeglüht wird. Hier können die mechanischen Eigenschaften auf einfache Weise durch einen Glühprozess eingestellt werden.

Bevorzugt beträgt die Verweildauer der Aluminiumlotschicht des Aluminiumverbundwerkstoffs in der Beize 1 - 20 s, bevorzugt 2 - 8 s. Diese Verweildauer ermöglicht einen ausreichenden Angriff Oberfläche der Aluminiumlotschicht durch die Beize, um dort Silizium anzureichern oder auch um Siliziumpartikel freizulegen.

Die Reaktion der Beize mit der Aluminiumlotschicht kann dadurch weiter verbessert werden, dass die Temperatur der Beize 65°C - 80°C beträgt. Insbesondere kann bei einer erhöhten Temperatur die Prozessgeschwindigkeit gesteigert werden.

Vorzugsweise kann eine saure Spülung unter Verwendung einer Salpetersäure oder einer Schwefelsäure erfolgen, so dass Beizreste vom bandförmigen Aluminiumverbundwerkstoff entfernt werden können.

Ein Verfahren zum thermischen Fügen von Bauteilen aus einer Aluminiumlegierung kann gemäß einer Verwendung eines Aluminiumverbundwerkstoff nach Patentanspruch 1 erfolgen. Ein bevorzugtes thermisches Fügeverfahren ist das CAB-Lötverfahren. Denkbar sind aber auch andere ein Schutzgas benötigende Fügeverfahren, wie beispielsweise das Laserlöten.

Im Weiteren soll die Erfindung anhand von Ausführungsbeispielen in Verbindung mit der Zeichnung näher erläutert werden. In der Zeichnung zeigt:
- Fig. 1: eine perspektivische Darstellung einer Lötversuchsanordnung zum Nachweis der Lötbarkeit des Aluminiumverbundwerkstoffs,
- Fig. 2: eine Schnittansicht entlang der Längsachse der Lötversuchsanordnung aus Fig. 1,
- Fig. 3: ein Lötversuchsergebnis unter Verwendung eines konventionellen Aluminiumverbundwerkstoffs,
- Fig. 4 a) bis c): Lötversuchsergebnisse für drei verschiedene Ausführungsbeispiele eines verwendeten Aluminiumverbundwerkstoffs, davon Fig. 4b) erfindungsgemäß,
- Fig. 5: eine Rasterelektronenmikroskopaufnahme der Oberfläche des Aluminiumverbundwerkstoffs aus Fig. 3. vor dem Löten,
- Fig. 6a) bis c): Rasterelektronenmikroskopaufnahmen der Oberfläche der Ausführungsbeispiele aus Fig. 4a) bis c) vor dem Löten (Fig. 6a) und Fig. 6c) nicht erfindungsgemäß) und
- Fig. 7: ein Ausführungsbeispiel einer gelöteten Konstruktion, welche den erfindungsgemäß verwendeten Aluminiumverbundwerkstoff aufweist.

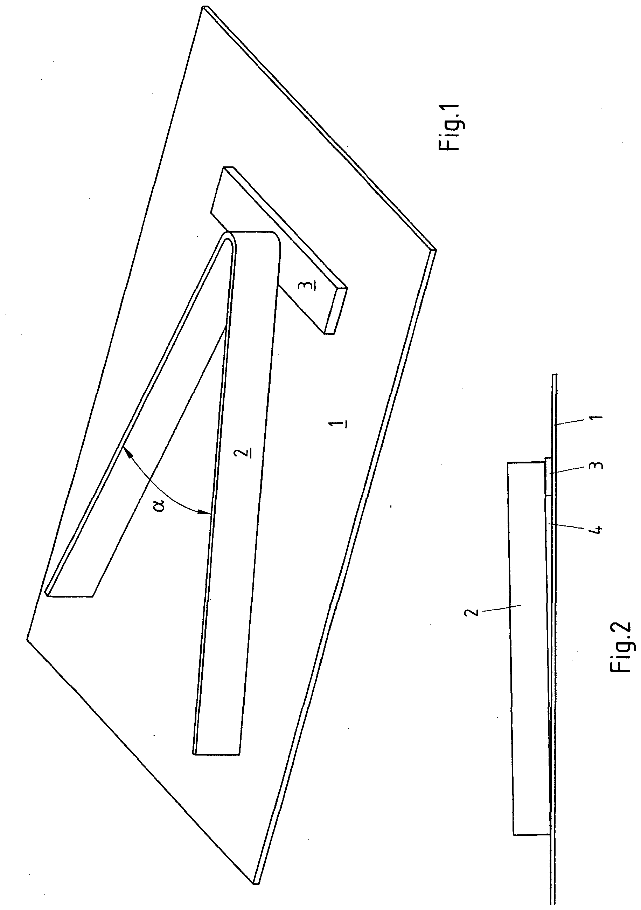

Die Löteigenschaften des erfindungsgemäß verwendeten Aluminiumverbundwerkstoffs wurden unter Verwendung eines flussmittelfreien CAB-Lötverfahrens mit einer spezifischen Lötversuchsanordnung, wie sie in Fig. 1 dargestellt ist, überprüft. Die Lötversuchsanordnung besteht aus insgesamt drei Teilen. Einem Blech 1, einem Winkelblech 2 und einem Auflageblech 3 für das Winkelblech 2. Das Winkelblech 2 liegt mit seinem geschlossenen Ende 2a auf dem auf Blech 1 angeordneten Auflageblech 3 auf. Beide Schenkelenden 2b dagegen liegen auf dem Blech 1 auf. Wie in Fig. 2 in einer Schnittansicht dargestellt, entsteht so ein sich verändernder Spalt von dem Auflagepunkt der Schenkelenden 2b des Winkelblechs 2 bis zum Auflagepunkt des geschlossenen Endes 2a auf dem Auflageblech 3. Durch den größer werdenden Lötspalt besteht die Möglichkeit zu beurteilen, wie gut die Löteigenschaften des Bleches 1 sind. Wird beispielsweise der größer werdende Spalt 4 zu einem großen Teil gefüllt, ist von einem sehr guten Lötverhalten bei den spezifischen Verfahrensparametern auszugehen.

Das Blech 1 besteht im vorliegenden Ausführungsbeispiel aus einem Aluminiumverbundwerkstoff mit einer walzplattierten Aluminiumlotschicht. Die im Versuch verwendeten Blechdicken lagen zwischen bei 0,5 mm und 1 mm. Die Länge des Blechs 1 beträgt 70 mm und die Breite 50 mm. Die Länge der Schenkel des Winkels 2 beträgt jeweils 50 mm. Das Winkelblech 2 besitzt einen Öffnungswinkel von 35°. Das Auflageblech 3 hat eine Dicke von 1 mm, so dass der Höhenunterschied von dem geschlossenen Ende des Winkelblechs bis zum Schenkelende von 1 mm besteht. Die Dicke des Winkelblechs 2 beträgt 0,6 mm. Das Winkelblech 2 ist nicht mit einer Aluminiumlotschicht ausgestattet.

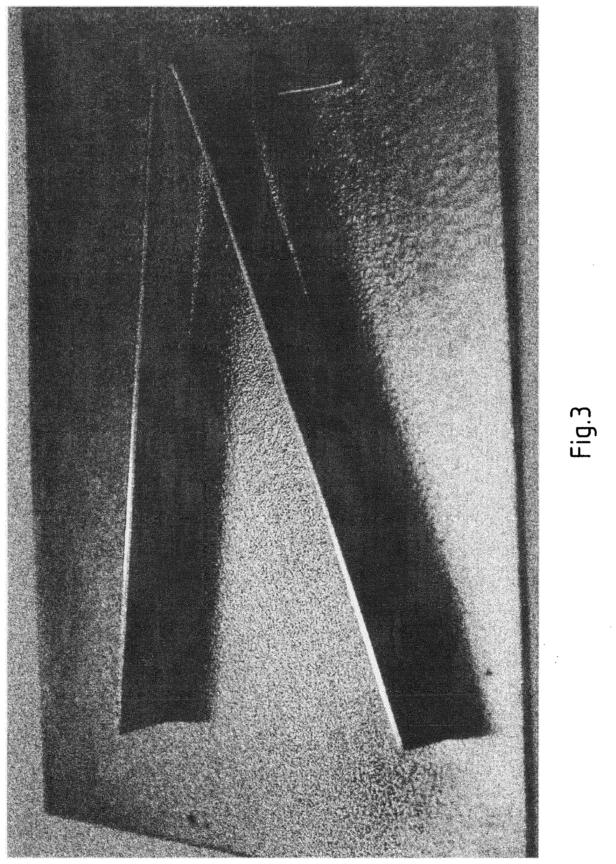

In Fig. 3 ist das Lötergebnis eines konventionellen Aluminiumverbundwerkstoffs gezeigt. Der Aluminiumverbundwerkstoff mit einer Kernschicht aus einer Aluminiumlegierung vom Typ AA 3003 wies eine Gesamtdicke von 0,5 mm auf und war beidseitig mit einem AlSi10-Aluminiumlot (AA 4045) plattiert. Die Plattierschichtdicke betrug je Seite 11,5 % der Gesamtdicke. Insofern ergab sich eine Plattierschichtdicke von jeweils etwa 0,0575 mm. Die Lötung erfolgte nach einer Aufheizphase bei einer Temperatur von 600 °C, wobei die Löttemperatur für 4 Minuten gehalten wurde. Die Lötung erfolgte ohne Flussmittel in einer Stickstoffatmosphäre. Wie aus Fig. 3 zu erkennen ist, zeigte sich nach dem Löten keine Füllung des Spaltes zwischen dem Winkelblech und Verbundwerkstoff, so dass keine Lötverbindung erzeugt werden konnte. Dieses Ergebnis war nicht überraschend, da aufgrund des einfachen Aufbaus des Aluminiumverbundwerkstoffs eine flussmittelfreie Lötung nicht erwartet wurde.

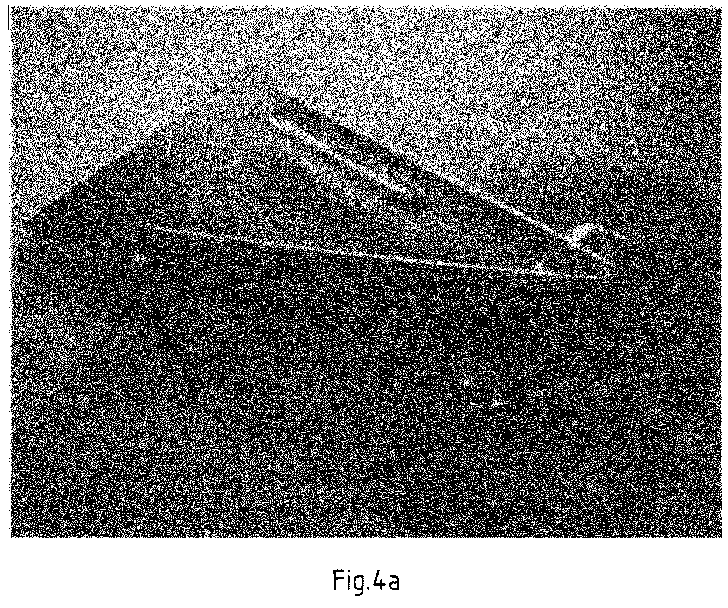

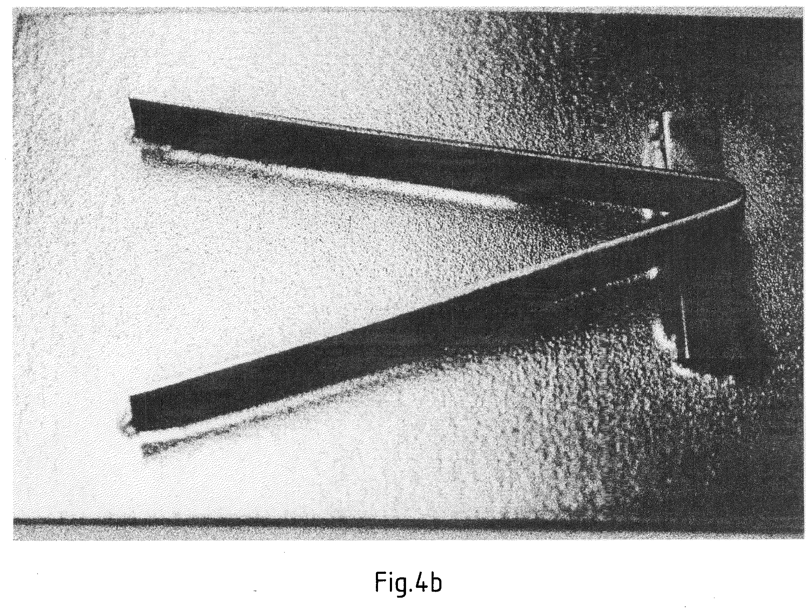

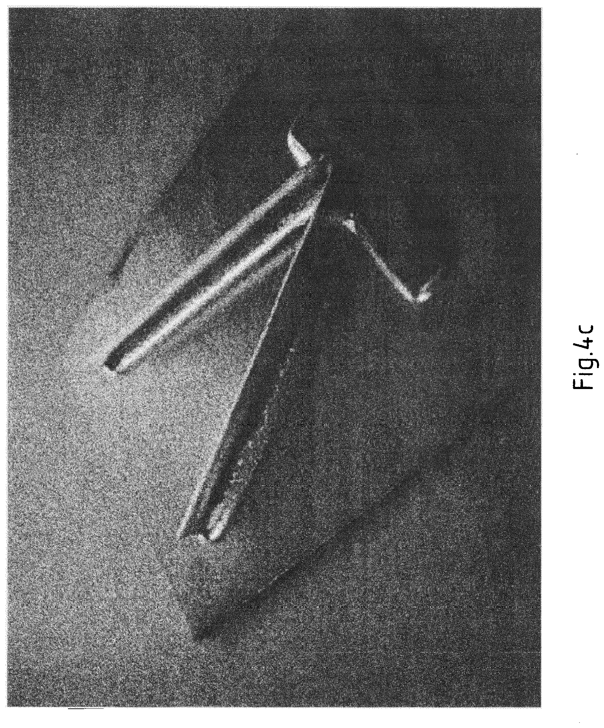

Im Unterschied dazu zeigen Fig. 4a) bis 4c) die Lötergebnisse unter Verwendung eines Aluminiumverbundwerkstoffs mit gebeizter, hier alkalisch gebeizter Aluminiumlotschichtoberfläche. Die Gesamtdicke der verwendeten Aluminiumverbundwerkstoffe betrug für die in Fig. 4a) und 4c) dargestellten Ausführungsbeispiele 1 mm mit einer beidseitigen Plattierschichtdicke von 15 % bzw. 0,15 mm. Das Ausführungsbeispiel aus Fig. 4a) war mit einer AlSi7,5 und das Ausführungsbeispiel aus Fig. 4 c) mit einer AlSi12-Aluminiumlotschicht plattiert. Als Aluminiumkernlegierung wurde eine Legierung vom Typ AA 3003 verwendet. Das erfindungsgemäße Ausführungsbeispiel aus Fig. 4b) entsprach exakt dem der Fig. 3 mit dem Unterschied, dass das Ausführungsbeispiel aus Fig. 4b), wie auch die nicht erfindungsgemäßen Ausführungsbeispiele 4a) und 4c) eine alkalische gebeizte Oberfläche aufweist.

Eindrucksvoll ist zu erkennen, dass die Aluminiumlotschicht im Bereich der Auflagepunkte des Blechwinkels und darüber hinaus entlang mindestens etwa 2/3 der Schenkellängen eine Lötverbindung hergestellt hat. Deutlich ist zu erkennen, dass das auf dem Aluminiumverbundwerkstoff vorhandene Aluminiumlot aufgeschmolzen und eine Lötverbindung mit dem Winkelblech auch in Bereichen mit relativ großem Spalt erzeugt hat. Lediglich die Bereiche mit extrem hoher Spaltbreite in der Nähe der Auflage des geschlossenen Endes des Blechwinkels wurden nicht gelötet. Zusätzlich ist zu erkennen, dass mit zunehmendem Si-Anteil in der Aluminiumlotschicht eine verbesserte Spaltfüllung erzielt wird. Es zeigt sich, dass mit den erfindungsgemäß zu verwendenden Aluminiumverbundwerkstoffen mit gebeizter Oberfläche auf die Verwendung von Flussmitteln beim CAB-Lötverfahren verzichtet werden kann.

Die getesteten Aluminiumverbundwerkstoffe waren walzplattiert. Identische Ergebnisse werden aber auch für durch simultanes Gießen oder thermisches Spritzen erzeugte Aluminiumverbundwerkstoffe erwartet.

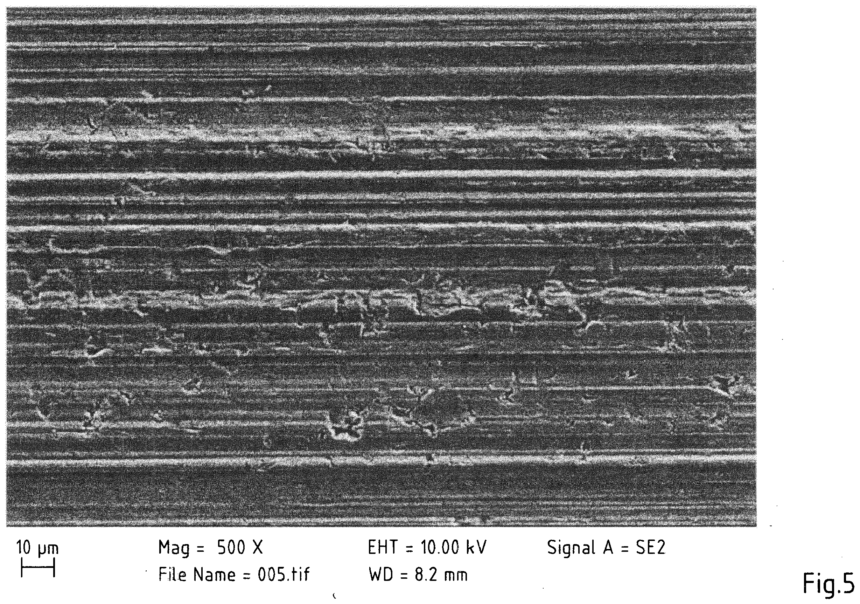

In Fig. 5 ist eine Rasterelektronenmikroskop(REM)-Aufnahme der Oberfläche des Ausführungsbeispiels eines walzplattierten, konventionellen Aluminiumverbundwerkstoffs aus Fig. 3 dargestellt, bevor dieser zur Lötung verwendet wurde. Der dargestellte Aluminiumverbundwerkstoff ist einer Glühung unterzogen worden, um den Aluminiumverbundwerkstoff wieder in den Zustand weich zu versetzen. In Fig. 5 ist deutlich zu erkennen, dass die Oberfläche glatt ist, keine Siliziumpartikel an der Oberfläche aufweist und eine normale Walzstruktur besitzt.

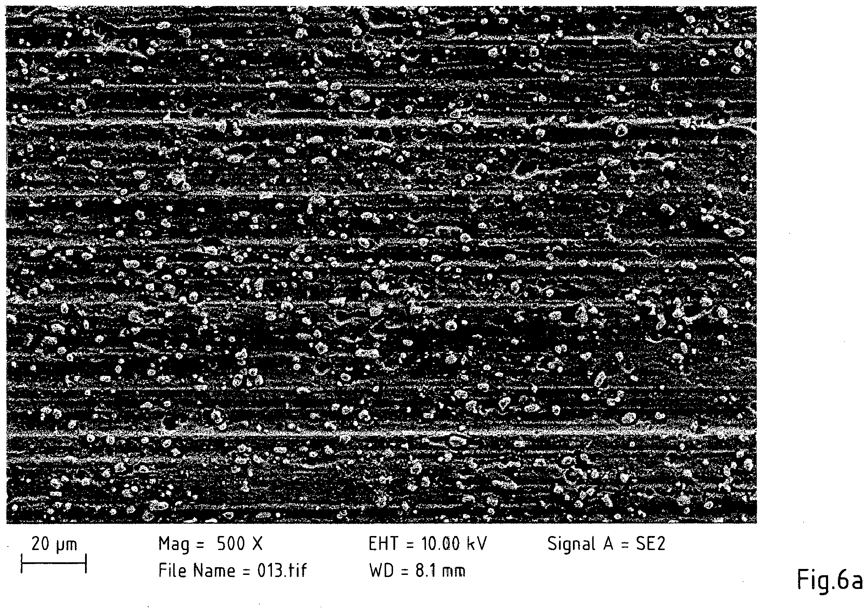

Fig. 6a) bis 6c) zeigen die Aluminiumverbundwerkstoffe der Fig. 5a) bis 5c) nach dem Beizen der Oberfläche in REM-Aufnahmen. Die Bleche aus Fig. 6a) und 6c) wurden nicht erfindungsgemäß einer manuellen Beize durch Tauchen im Labor unterzogen, wobei eine Natronlauge in einer Konzentration von 1 Gew.-% mit einer Kontaktzeit von etwa 3 Minuten bei 60 °C Beizetemperatur verwendet wurde. Die lange Beizzeit wurde gewählt, um einen ähnlich Beizangriff zu erzielen, wie er in der Fertigung durch ein Spritzverfahren erzielt wird. Mit der Beize wurde gleichzeitig ein Entfettungsmedium in einer Konzentration von 1 Gew.-% eines Gemisches aus 5 - 40 Gew.-% Natriumtripolyphosphat, 3 - 10 Gew.-% Natriumgluconat, 3 - 8 Gew.-% nichtionischer und anionischer Tenside verwendet. Nach dem Beizen wurde in einer 1%-igen Salpetersäure dekapiert.

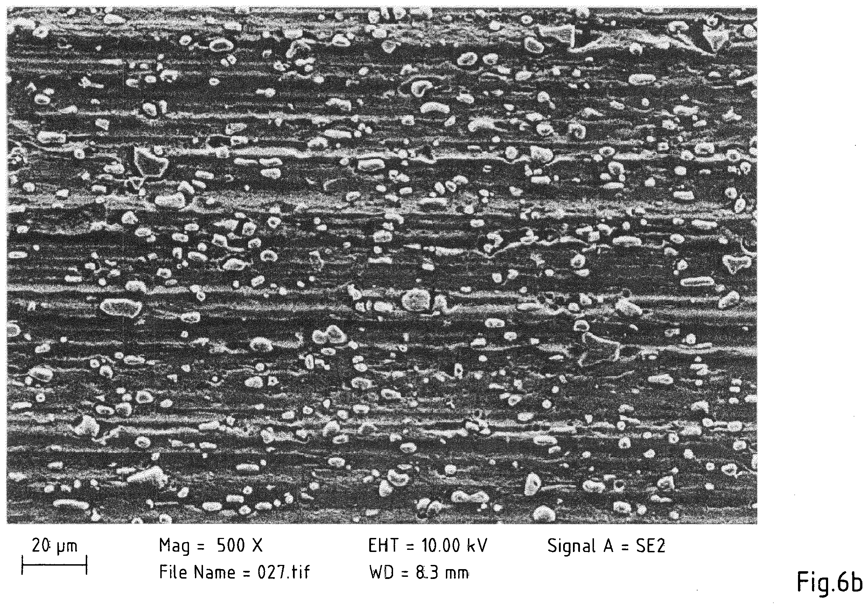

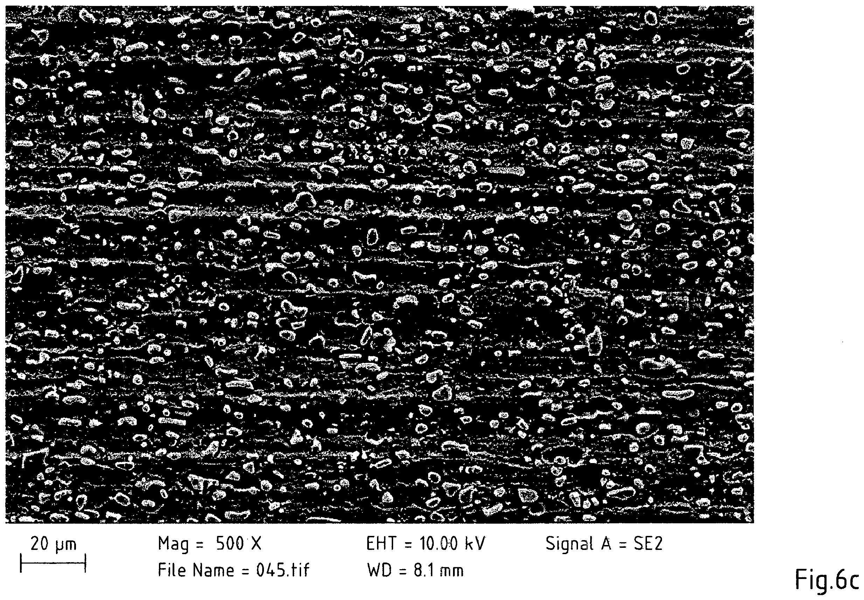

Das Ausführungsbeispiel aus Fig. 6b) entstammt einem Coil-to-Coil-Fertigungsschritt, welcher Entfettung- und Beizschritt gleichzeitig beinhaltete und wobei das Beiz- und Entfettungsmedium aufgespritzt wird. Neben 1,5 Gew.-% Natronlauge enthielt das Entfettungsmedium 1 Gew.-% eines Gemisches aus 5 - 40 Gew.-% Natriumtripolyphosphat, 3 - 10 Gew.-% Natriumgluconat, 3 - 8 Gew.-% nichtionischer und anionischer Tenside. Die Kontaktzeit betrug 2 bis 8 s bei einer Beizetemperatur von 75 °C. Fig. 6a) zeigt im Vergleich zur Fig. 5) zahlreiche, zumindest teilweise freiliegende Siliziumpartikel und zudem geätzte Vertiefungen auf der Oberfläche der Aluminiumlotschicht. Das Gleiche gilt auch für Fig. 6b) und Fig. 6c), wobei die Belegung der Oberflächen mit zumindest teilweise freiliegenden Siliziumpartikeln aufgrund des höheren Si-Gehaltes der Aluminiumlotschichten gegenüber Fig. 6a) bis hin zur Fig. 6c) ansteigt. Wie an den REM-Aufnahmen deutlich wird, wird durch das Beizen das Aluminium derart aufgelöst, dass auf der Oberfläche die in der Beize nicht löslichen Siliziumpartikel verbleiben. Es wird davon ausgegangen, dass die durch den Beizprozess hervorgerufene Erhöhung der Siliziumkonzentration in der Oberfläche beispielsweise durch Anreicherung bis hin zum Freilegen einer Vielzahl von Siliziumpartikeln zu der deutlichen Verbesserung des Lötverhaltens des Aluminiumverbundwerkstoffes führt. Vorteilhaft wirkt sich zudem aus, dass die in Fig. 5 auf der Oberfläche vorhandene relativ dicke Aluminiumoxidschicht, welche sich durch die vorgelagerten Prozessschritte bildet, entfernt und durch eine neue, sehr dünne Aluminiumoxidschicht ersetzt wird. Im Unterschied zu Fig. 6a) und Fig. 6c) zeigt Fig. 6b) weniger tiefe, geätzte Mulden bei einer relativ hohen Anzahl an auf der Oberfläche zumindest teilweise freigelegten Siliziumpartikeln.

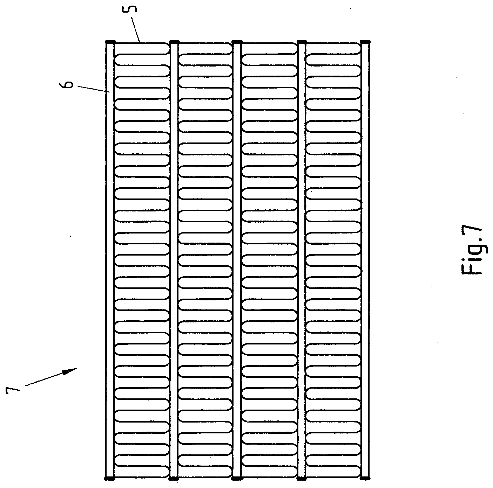

Mit der erfindungsgemäßen Verwendung des Aluminiumverbundwerkstoffs ist es damit erstmals gelungen, mit einfachen Aluminiumlotschichten und ohne die Verwendung von Flussmitteln prozesssicher eine Lötung im CAB-Verfahren herzustellen. Eine einfache Aluminiumlotschicht, beispielsweise aus einer Aluminiumlegierung vom Typ AlSi12, AlSi10 oder AlSi7,5 kann verwendet werden, um gelötete Konstruktionen mit dem erfindungsgemäß zu verwendenden Aluminiumverbundwerkstoff herzustellen. Beispielsweise kann der Aluminiumverbundwerkstoff vorteilhaft bei der Herstellung eines gelöteten Wärmetauschers 7, wie er in Fig. 7 dargestellt ist, erfindungsgemäß verwendet werden.

Die Lamellen 5 des Wärmetauschers bestehen üblicherweise aus blankem oder beidseitig mit einem Aluminiumlot beschichtetem Aluminiumlegierungsband. Die Lamellen 5 werden mäanderförmig gebogen an Rohre 6 gelötet, so dass eine Vielzahl an Lötverbindungen benötigt wird. Es ist daher besonders vorteilhaft den Alumniumverbundwerkstoff erfindungsgemäß zu verwenden, da die besonders guten Lötergebnisse beim CAB-Lötverfahren auch ohne Flussmittel erzielt werden. Die so hergestellten Wärmetauscher haben bei Verwendung des CAB-Lötverfahrens eine höhere Lebensdauer, da Flussmittelrückstände nicht mehr vorhanden sind. Insbesondere wirken sich die fehlenden Flussmittelrückstände positiv auf den Betrieb der Wärmetauscher aus.

Dies gilt selbstverständlich auch für andere üblicherweise unter Verwendung von Flussmitteln gelötete Konstruktionen mit einem Aluminiumverbundwerkstoff.

## Patentansprüche

1. Verwendung eines Aluminiumverbundwerkstoff bestehend aus mindestens einer Aluminiumkernlegierung und mindestens einer ein- oder beidseitig auf der Aluminiumkernlegierung vorgesehenen, äußeren Lotschicht bestehend aus einer Aluminiumlotlegierung, wobei die Aluminiumlotschicht eine alkalisch gebeizte Oberfläche aufweist und der Aluminiumverbundwerkstoff bandförmig ist und mit einem Verfahren hergestellt ist, bei welchem durch Walzplattieren oder simultanen Gießen und anschließendes Walzen ein bandförmiger Aluminiumverbundwerkstoff hergestellt wird und die Aluminiumlotschicht alkalisch gebeizt wird, wobei der Aluminiumverbundwerkstoff vor dem Beizen oder während des Beizens mit einem Entfettungsmedium entfettet wird, die alkalische Beize Natronlauge mit einer Konzentration von 0,2 bis 10 Gew.-% oder 0,2 bis 5 Gew.-% aufweist und die Beize neben Natronlauge zusätzlich organische oder anorganische Komplexbildner enthält, wobei das Beizen in-line mit dem letzten Kaltwalzschritt oder durch Verwendung eines Coil-to-Coil-Fertigungsschrittes erfolgt,
**dadurch gekennzeichnet, dass**
die gebeizte Oberfläche der Aluminiumlotschicht zumindest teilweise freiliegende oder freiliegende Siliziumpartikel aufweist und der Aluminiumverbundwerkstoff in einem flussmittelfreien, thermischen Fügeverfahren verwendet wird und das Fügeverfahren in Anwesenheit eines Schutzgases erfolgt.

2. Verwendung nach Anspruch 1,
**dadurch gekennzeichnet, dass**
der Aluminiumverbundwerkstoff in einem flussmittelfreien CAB-Lötverfahren verwendet wird.

3. Verwendung nach einem der Ansprüche 1 oder 2,
**dadurch gekennzeichnet, dass**
als Aluminiumkernlegierung eine Aluminiumlegierung vom Typ AAlxxx, AA2xxx, AA3xxx, AA5xxx oder AA6xxx vorgesehen ist.

4. Verwendung nach einem der Ansprüche 1 bis 3,
**dadurch gekennzeichnet, dass**
die Aluminiumlotlegierung folgende Zusammensetzung in Gew.-% aufweist:
6,5 % ≤ Si ≤ 15 %,
Fe ≤ 1 %,
Cu ≤ 0,3 %,
Mg ≤ 2,0 %,
Mn ≤ 0,15 %,
Zn ≤ 0,15 %,
Ti ≤ 0,30 %,
Rest Al und unvermeidbare Verunreinigungen einzeln maximal 0,05 %, in Summe maximal 0,15 %.

5. Verwendung nach einem der Ansprüche 1 bis 4,
**dadurch gekennzeichnet, dass**
der Aluminiumverbundwerkstoff vor dem Beizen weich- oder rückgeglüht ist.

## Claims

1. Use of an aluminium composite material consisting of at least one aluminium core alloy and at least one outer brazing layer consisting of an aluminium brazing alloy provided on one or both sides of the aluminium core alloy, wherein the aluminium brazing layer has an alkaline pickled surface and the aluminium composite material is strip-shaped and is produced by a method, in which a strip-shaped aluminium composite material is produced by roll cladding or simultaneous casting and subsequent rolling, and the aluminium brazing layer is alkaline pickled, wherein the aluminium composite material is degreased with a degreasing medium before pickling or during pickling, the alkaline pickling comprises sodium hydroxide at a concentration of 0.2 to 10 wt.-% or 0.2 to 5 wt.-% and the pickling additionally contains organic or inorganic complexing agents in addition to sodium hydroxide, wherein the pickling is carried out in-line with the final cold rolling step or by using a coil-to-coil production step,
**characterized in that**
the pickled surface of the aluminium brazing layer has at least partially exposed or exposed silicon particles and the aluminium composite material is used in a fluxless, thermal joining process and the joining process is carried out in the presence of a protective gas.

2. Use according to claim 1,
**characterized in that**
the aluminium composite material is used in a fluxless CAB brazing process.

3. Use according to one of claims 1 or 2,
**characterized in that**
an aluminium alloy of the type AA1xxx, AA2xxx, AA3xxx, AA5xxx or AA6xxx is provided as the aluminium core alloy.

4. Use according to any one of claims 1 to 3,
**characterized in that**
the aluminium brazing alloy has the following composition in wt.-%:
6,5 % ≤ Si ≤ 15 %,
Fe ≤ 1 %,
Cu ≤ 0,3 %,
Mg ≤ 2,0 %,
Mn ≤ 0,15 %,
Zn ≤ 0,15 %,
Ti ≤ 0,30 %,
balance Al and unavoidable impurities individually 0.05 % at maximum, in total 0.15 % at maximum.

5. Use according to any one of claims 1 to 4,
**characterized in that**
the aluminium composite material is soft-annealed or reverse-annealed before pickling.

## Revendications

1. Utilisation d'un matériau composite en aluminium constitué d'au moins un alliage de noyau en aluminium et d'au moins une couche de brasage extérieur constituée d'un alliage de brasage en aluminium prévu sur un côté ou sur les deux côtés de l'alliage de noyau en aluminium, la couche de brasage en aluminium ayant une surface décapée de manière alcaline et le matériau composite en aluminium étant en forme de bande et étant produit par un procédé, dans lequel un matériau composite en aluminium en forme de bande est produit par placage au rouleau ou par coulée simultanée et laminage ultérieur et la couche de brasage en aluminium est décapée de manière alcaline, le matériau composite en aluminium étant dégraissé avec un agent de dégraissage avant le décapage ou pendant le décapage, la décapant alcaline comprenant de la soude caustique à une concentration de 0,2 à 10 % en poids ou 0,2 à 5 % en poids et la décapant contenant en outre des agents complexants organiques ou inorganiques en plus de la soude caustique, le décapage étant effectué en ligne avec l'étape finale de laminage à froid ou en utilisant une étape de production de bobine à bobine,
**caractérisée en ce que**
la surface décapée de la couche de brasage en aluminium présente des particules de silicium au moins partiellement exposées ou exposées et le matériau composite en aluminium est utilisé dans un processus d'assemblage thermique sans flux et le processus d'assemblage est réalisé en présence d'un gaz protecteur.

2. Utilisation selon la revendication 1,
**caractérisée en ce que**
le matériau composite en aluminium est utilisé dans un processus de brasage CAB sans flux.

3. Utilisation selon l'une des revendications 1 ou 2,
**caractérisée en ce qu'**
un alliage d'aluminium du type AA1xxx, AA2xxx, AA3xxx, AA5xxx ou AA6xxx est prévu comme l'alliage de noyau en aluminium.

4. Utilisation selon l'une des revendications 1 à 3,
**caractérisée en ce que**
l'alliage de brasage en aluminium a la composition suivante en % en poids :
6,5 % ≤ Si ≤ 15 %,
Fe ≤ 1 %,
Cu ≤ 0,3 %,
Mg ≤ 2,0 %,
Mn ≤ 0,15 %,
Zn ≤ 0,15 %,
Ti ≤ 0,30 %,
le reste Al et impuretés inévitables individuellement 0,05 % au maximum, au total 0,15 % au maximum.

5. Utilisation selon l'une des revendications 1 à 4,
**caractérisée en ce que**
le matériau composite en aluminium est soumis à un recuit doux ou à un recuit de récupération avant le décapage.
